# FASCICULE DE BREVET EUROPEEN

(11) **EP 3 471 228 B1**
(45) Date de publication et mention de la délivrance du brevet: **19.01.2022**
(21) Numéro de dépôt: 18188956.9
(22) Date de dépôt: 14.08.2018
(51) Int. Cl.: H02H 3/33, H02H 3/093

(54) **DISPOSITIF ET PROCÉDÉ DE PROTECTION DIFFÉRENTIELLE ET APPAREIL ÉLECTRIQUE COMPORTANT UN TEL DISPOSITIF**
VORRICHTUNG UND VERFAHREN ZUM DIFFERENTIALSCHUTZ, UND EINE SOLCHE VORRICHTUNG ENTHALTENDES ELEKTRISCHES GERÄT
DEVICE AND METHOD FOR DIFFERENTIAL PROTECTION AND ELECTRONIC APPARATUS INCLUDING SUCH A DEVICE

(30) Priorité: 13.10.2017 FR 1759620
(43) Date de publication de la demande: 17.04.2019
(73) Titulaire: Schneider Electric Industries SAS, 92500 Rueil-Malmaison (FR)
(72) Inventeur: BERNARD, Jean-Baptiste, 38050 GRENOBLE (FR)
(74) Mandataire: Colette, Marie-Françoise

(56) Documents cités:
- EP-A1- 0 924 833
- EP-A2- 1 821 325
- EP-B1- 0 924 833
- US-A- 5 600 523
- US-A1- 2010 324 747
- US-A1- 2014 092 503
- US-A1- 2016 202 321

## Description

### DOMAINE TECHNIQUE

L'invention concerne un dispositif de protection différentielle comportant :
- un capteur de mesure de courant différentiel, et
- une unité de traitement de défaut différentiel connectée audit capteur de mesure pour recevoir un signal de mesure de courant différentiel et pour fournir un signal de déclenchement à un actionneur, ladite unité de traitement comportant :
- un module de détection de défaut différentiel recevant un signal représentatif d'un courant différentiel et fournissant un signal représentatif d'un dépassement de seuil de défaut différentiel,
- un module de temporisation de déclenchement commandé par ledit module de détection de défaut différentiel pour activer ladite temporisation de déclenchement lorsque ledit seuil de défaut différentiel est dépassé, et
- un module de détection de signaux à forte énergie.

L'invention concerne un procédé de protection différentielle comportant :
- la mesure d'un signal représentatif d'un courant différentiel,
- le traitement de défaut différentiel pour fournir un signal de déclenchement lorsque le signal de défaut différentiel dépasse un seuil de déclenchement prédéterminé pendant une durée prédéterminée, et
- la détection de signaux différentiel de forte énergie.

L'invention concerne aussi un appareil de coupure électrique comportant les conducteurs principaux connectés en série avec des contacts principaux, un mécanisme d'ouverture desdits contacts principaux, et un dispositif de protection différentielle pour commander l'ouverture des contacts principaux en cas de défaut électrique différentiel.

### ETAT DE LA TECHNIQUE

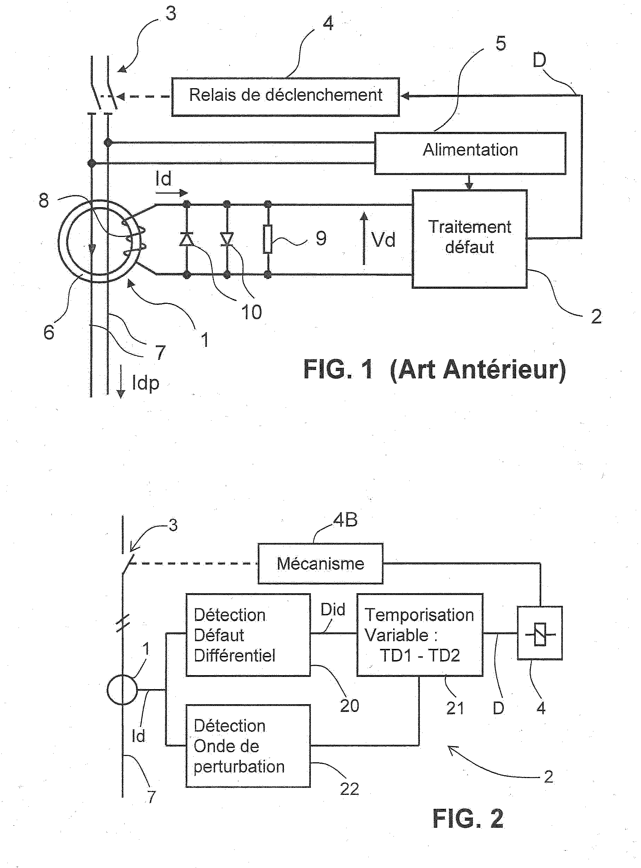

Des dispositifs de protection différentielle connus tels que ceux représentés sur le schéma de la figure 1 comportent un capteur 1 de mesure de courant différentiel Id connecté à un circuit de traitement 2 pour déclencher l'ouverture de contact 3 principaux à travers un relais de déclenchement 4. Lorsque le dispositif de protection différentielle n'est pas dans la catégorie des dispositifs devant fonctionner à propre courant, le circuit de traitement est généralement alimenté par un circuit d'alimentation 5. Le capteur 1 de mesure comporte généralement un tore 6 en matériau magnétique entourant des conducteurs principaux 7 et un enroulement secondaire 8 fournissant un courant de mesure Id représentatif du courant différentiel Idp au primaire du capteur. Le courant secondaire Id traverse une résistance de mesure 9 pour fournir au circuit de traitement un signal de mesure Vd représentatif du courant secondaire Id. Un limiteur de tension représenté par deux diodes 10 connectées en tête-bêche limite la tension du signal Vd pour protéger le circuit de traitement.

Des perturbations de forte énergie appliquées sur les conducteurs principaux et générant de forts courants différentiels peuvent perturber le fonctionnement des capteurs de courant 1. De tels courants différentiels sont dus notamment à des défauts différentiels de forte valeur apparaissant pendant une courte durée, par exemple des défauts supérieurs à plusieurs fois un seuil de déclenchement. Certains courants peuvent atteindre plusieurs ampères. D'autres courants perturbateurs sont dus à des courants provoqués par des décharges de tests de tenues à des ondes normalisées par exemple 8/20 ou à des décharges réelles entre les conducteurs principaux et des masses ou la terre.

De forts courants différentiels de courte durée ne doivent pas faire déclencher l'ouverture des contacts principaux surtout lorsque le dispositif de protection différentiel est en tête de distribution électrique. Souvent ce type de dispositif comporte une temporisation du déclenchement pour assurer une sélectivité avec des appareils de protection différentielle situés en aval.

En particulier lorsque le capteur de courant est un tore à circuit magnétique, de l'énergie stockée dans le capteur continue à fournir du courant secondaire Id même après la disparition du fort courant différentiel sur les conducteurs principaux. Ce courant secondaire de traine est vu par le circuit de traitement comme un courant de défaut persistant et peut donner lieu à un déclenchement alors que le défaut a disparu. Dans ces cas, les temporisations pourraient ne pas assurer une immunité suffisante aux courants perturbateurs de très forte énergie. Ainsi, de tels courants perturbateurs de très forte énergie peuvent affecter la sélectivité des dispositifs de protection sélectifs.

Le document EP2352213 décrit une solution pour pallier à cet inconvénient. Elle consiste à inhiber le déclenchement tant qu'un signal de mesure ne repasse pas à une valeur proche de zéro après une onde de perturbation. Cette solution fonctionne correctement avec des capteurs de mesure dont le circuit magnétique est en matériau habituel tel que le FeNi (fer-nickel).

Cependant, avec d'autres matériaux tels que de la ferrite, l'énergie restituée sur le secondaire du capteur est très élevée. Dans ce cas, la solution précédente n'est plus suffisante pour couvrir toutes les configurations de fonctionnement.

Autres dispositifs de protection différentielle à différents niveaux de temporisation sont divulgués dans les documents US 5600523 et US 2016/202321.

### EXPOSE DE L'INVENTION

L'invention, telle que définie par le jeux de revendications attachées, a pour but un dispositif et un procédé de protection différentielle à très fort niveau d'immunité aux courants perturbateurs.

Dans un dispositif de protection différentielle selon l'invention comportant :
- un capteur de mesure de courant différentiel, et
- une unité de traitement de défaut différentiel connectée audit capteur de mesure pour recevoir un signal de mesure de courant différentiel et pour fournir un signal de déclenchement à un actionneur, ladite unité de traitement comportant :
- un module de détection de défaut différentiel recevant un signal représentatif d'un courant différentiel et fournissant un signal représentatif d'un dépassement de seuil de défaut différentiel,
- un module de temporisation de déclenchement commandé par ledit module de détection de défaut différentiel pour activer ladite temporisation de déclenchement lorsque ledit seuil de défaut différentiel est dépassé, et
- un module de détection de signaux à forte énergie, ledit module de temporisation de déclenchement est connecté audit module de détection de signaux à forte énergie et comporte une gestion de temporisation de déclenchement pour contrôler la durée de temporisation de déclenchement en fonction de la détection de la présence de signaux à forte énergie.

Selon la présente invention, en outre, ledit module de temporisation de déclenchement comporte :
- une temporisation longue ou lente commandée lorsque le module de détection de signaux à forte énergie détecte une première onde à forte énergie, et
- une temporisation courte ou rapide par défaut tant qu'une première onde n'est pas détectée ou lorsqu'une succession d'ondes à forte énergie est détectée.

De préférence, ledit module de détection de signaux à forte énergie comporte au moins un seuil de détection de signaux à forte énergie supérieur à un seuil de protection différentielle pour la commande de passage en temporisation lente ou longue.

Avantageusement, ledit module de détection de signaux à forte énergie comporte :
- au moins un premier seuil de détection de signaux à forte énergie supérieur à un seuil de protection différentielle pour la commande de passage en temporisation lente ou longue,
- au moins un second seuil bas de détection de signaux à forte énergie supérieur à un seuil de protection différentielle pour la commande de passage en temporisation rapide ou courte.

De préférence, ledit module de détection de signaux à forte énergie comporte une inhibition du contrôle de détection de signaux à forte énergie pendant une durée prédéterminé inférieure à une demi-alternance d'un signal alternatif d'un réseau électrique à protéger.

De préférence, ledit module de temporisation de déclenchement comporte une gestion de temporisation de déclenchement comportant un compteur pour contrôler ladite durée de temporisation de déclenchement, ledit compteur ayant une incrémentation pour les temporisations lente ou rapide et une décrémentation pour un effet de mémoire, les temporisation lentes ou rapides étant commandées lorsque un défaut différentiel est détecté et la fonction mémoire étant commandée lorsque ledit défaut différentiel n'est plus présent.

Avantageusement, ledit compteur a une incrémentation élevée pour la temporisation courte ou rapide et une incrémentation basse pour la temporisation longue ou lente.

Avantageusement, ledit compteur a une valeur cible basse pour la temporisation courte ou rapide et une valeur cible haute pour la temporisation longue ou lente.

De préférence, le capteur de mesure de courant différentiel est un capteur comportant un circuit magnétique en matériaux ferrite.

Avantageusement, ledit dispositif de protection différentielle est associé à un dispositif de protection contre les arcs électriques, ledit dispositif de protection différentielle et ledit dispositif de protection arcs électriques ayant un capteur de mesure de courant différentiel commun.

Un appareil de coupure électrique selon l'invention comportant les conducteurs principaux connectés en série avec des contacts principaux et un mécanisme d'ouverture desdits contacts principaux, comporte un dispositif de protection différentielle défini ci-dessus comportant une gestion de temporisation de déclenchement en fonction de la détection de la présence de signaux à forte énergie, lesdits moyens de mesure étant disposés autour des conducteurs principaux pour mesurer un courant différentiel et lesdits moyens actionneurs coopérant avec ledit mécanisme d'ouverture.

Un procédé de protection différentielle selon l'invention comportant :
- la mesure d'un signal représentatif d'un courant différentiel,
- le traitement de défaut différentiel pour fournir un signal de déclenchement lorsque le signal de défaut différentiel dépasse un seuil de déclenchement prédéterminé pendant une durée prédéterminée,
- la détection de signaux différentiels de forte énergie,
comporte une gestion de la temporisation de déclenchement pour contrôler la durée de temporisation en fonction de la détection de la présence de signaux à forte énergie, ladite temporisation passant en temporisation longue lorsqu'une première onde à forte énergie est détectée.

Selon la présente invention, ladite gestion de la temporisation de déclenchement commande le passage de ladite temporisation de déclenchement en temporisation courte par défaut tant qu'une première onde n'est pas détectée ou lorsqu'une succession d'ondes à forte énergie est détectée.

De préférence, ladite détection de signaux à forte énergie comporte une inhibition du contrôle de détection de signaux à forte énergie pendant une durée prédéterminé inférieure à une demi-alternance d'un signal alternatif d'un réseau électrique à protéger.

Avantageusement, ladite gestion de temporisation de déclenchement comporte un compteur pour contrôler la durée de temporisation de déclenchement, ledit compteur ayant une incrémentation pour les temporisations lente ou rapide et une décrémentation pour un effet de mémoire, les temporisations lentes ou rapides étant commandées lorsqu'un défaut différentiel est détecté et la fonction mémoire étant commandée lorsque le défaut différentiel n'est plus présent.

### BREVE DESCRIPTION DES DESSINS

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :
- la figure 1 représente un schéma d'un dispositif de protection différentielle connu ;
- la figure 2 représente un schéma d'un dispositif de protection différentielle selon un premier mode de réalisation de l'invention ;
- la figure 3 représente un schéma d'un dispositif de protection différentielle selon un second mode de réalisation de l'invention associé à un dispositif de protection arc électrique ;
- la figure 4 représente un schéma d'un dispositif de protection différentielle selon un troisième mode de réalisation de l'invention ;
- la figure 5 représente un schéma d'un premier mode de commande d'un compteur de temporisation pour un dispositif de protection différentielle selon un mode de réalisation de l'invention ;
- la figure 6 représente un schéma d'un second mode de commande d'un compteur de temporisation pour un dispositif de protection différentielle selon un mode de réalisation de l'invention ;
- les figures 7A à 7C représentent des signaux avec signal de perturbation dans un dispositif de protection différentielle selon un mode de réalisation de l'invention ;
- les figures 8A à 8C représentent des signaux avec fort signal sans perturbation dans un dispositif de protection différentielle selon un mode de réalisation de l'invention ;
- les figures 9A à 9C représentent des signaux avec signaux de forte énergie successifs dans un dispositif de protection différentielle selon un mode de réalisation de l'invention ;
- la figure 10 représente un organigramme de la gestion de temporisation dans un procédé selon l'invention ;
- la figure 11 représente un organigramme de la protection différentielle dans un procédé selon l'invention.

### DESCRIPTION DETAILLEE DE MODES DE REALISATION

Les dispositifs de protection différentielle comme celui représenté sur la figure 1 comportent un capteur de mesure 1 de courant différentiel, et un circuit de traitement 2 de défaut différentiel connecté à un capteur de mesure pour recevoir un signal Id ou Vd de mesure et pour fournir un signal D de déclenchement. Le signal de mesure Id ou Vd est comparé à au moins un seuil de déclenchement SD pour détecter un défaut différentiel. Puis, si le seuil de déclenchement est dépassé pendant une durée TD de temporisation prédéterminée, le circuit de traitement fournit le signal D de déclenchement. Dans certains cas la temporisation peut être très basse ou nulle.

Lorsque le courant différentiel est généré par des courants ou des ondes à très forte énergie, le circuit magnétique du capteur sature et stocke une énergie qui est restituée ensuite sur l'enroulement secondaire du capteur. Certains, dispositifs avec des temporisations longues ou des blocages de protection arrivent à éviter des déclenchements intempestifs. Cependant lorsque les capteurs sont réalisés avec des matériaux à forte énergie comme les ferrites, les solutions connues ne sont plus suffisantes. Par exemple, des temporisations ou des blocages trop longs ne seraient pas compatibles avec des temps de déclenchement normalisés. De plus, des systèmes avec alimentation nécessitent des temps de traitement et de temporisation plus courts pour pallier des retards dus à la monté de l'alimentation et à l'initialisation des circuits électroniques. Ces cas de fonctionnement concernent notamment les fermetures des appareils électriques sur défaut électrique différentiel.

Pour pallier à ces inconvénients un dispositif selon l'invention comporte une gestion de la temporisation de déclenchement. Ainsi, si une première onde de perturbation est détectée, la temporisation de déclenchement passe en temporisation longue pour être immunisé et si des ondes successives de perturbation sont détectées la temporisation repasse en temporisation courte puisque cela indique une présence d'un défaut électrique à protéger dans des temps de déclenchement normalisés.

La figure 2 représente un schéma d'un appareil de coupure électrique comportant des conducteurs 7 principaux connectés en série avec des contacts 3 principaux et un mécanisme 4B d'ouverture desdits contacts principaux. Sur ce schéma, l'appareil comporte un dispositif de protection différentielle selon un premier mode de réalisation de l'invention comportant un capteur de mesure 1 de courant différentiel disposés autour des conducteurs 7 principaux pour mesurer un courant différentiel Id une unité de traitement 2, et un relais 4 de déclenchement coopérant avec le mécanisme 4B d'ouverture.

La figure 2 représente un schéma d'un dispositif de protection différentielle selon un premier mode de réalisation de l'invention. Le dispositif de protection différentielle comporte un capteur de mesure 1 de courant différentiel Id, et une unité de traitement 2 de défaut différentiel connectée audit capteur de mesure pour recevoir un signal Id de mesure de courant différentiel et pour fournir un signal de déclenchement D à un actionneur 4 pour déclencher un mécanisme 4B d'ouverture de contacts 3.

L'unité de traitement comporte :
- un module 20 de détection de défaut différentiel recevant un signal représentatif d'un courant différentiel Id et fournissant un signal représentatif Did d'un dépassement de seuil SD de défaut différentiel,
- un module 21 de temporisation de déclenchement commandé par le module 20 de détection de défaut différentiel pour activer ladite temporisation de déclenchement lorsque ledit seuil de défaut différentiel est dépassé, et
- un module de détection 22 de signaux à forte énergie perturbant ledit capteur de mesure 1.

Pour garantir une immunisation aux ondes de forte énergie tout en garantissant des temps de déclenchement normaux, le module 21 de temporisation de déclenchement est connecté audit module 22 de détection de signaux à forte énergie et comporte une gestion de temporisation de déclenchement pour contrôler la durée de temporisation de déclenchement en fonction de la détection de la présence de signaux à forte énergie. La temporisation par défaut est de préférence une temporisation courte permettant un délai normal de déclenchement. Si une onde de forte énergie est détectée, la temporisation est commandée pour fonctionner en temporisation longue ou lente. Cette temporisation longue ou lente permet de laisser passer l'onde perturbatrice et le signal stocké dans le circuit magnétique sans déclencher l'ouverture d'un appareil. Si plusieurs ondes successives sont détectées, la temporisation est commandée pour repasser en temporisation courte puisque dans ce cas le signal est saturé mais représente un défaut électrique de forte valeur. Une temporisation courte ou rapide est par exemple de l'ordre 12 ms (millisecondes) alors qu'une temporisation lente ou longue est de l'ordre de 40 ms. Un signal différentiel à forte énergie est par exemple, un courant supérieur à 150 mA, de l'ordre de 5 fois le seuil pour un seuil différentiel de 30 mA. Les seuils bas pour détecter un signal de forte énergie seront inférieurs à 150 mA. Les seuils pour détecter un défaut différentiel seront de l'ordre de 30 mA pour des applications destinées à la protection des personnes.

Dans la description qui va suivre la référence Id représente toutes les représentations de courant différentiel aussi bien des valeurs au primaires du capteur que des valeurs au secondaire. Id peut représenter des valeurs de courant différentiel alternatives, redressées, filtrées, analogiques et/ou numériques. Il en est de même de la valeur de seuil différentiel SD associée.

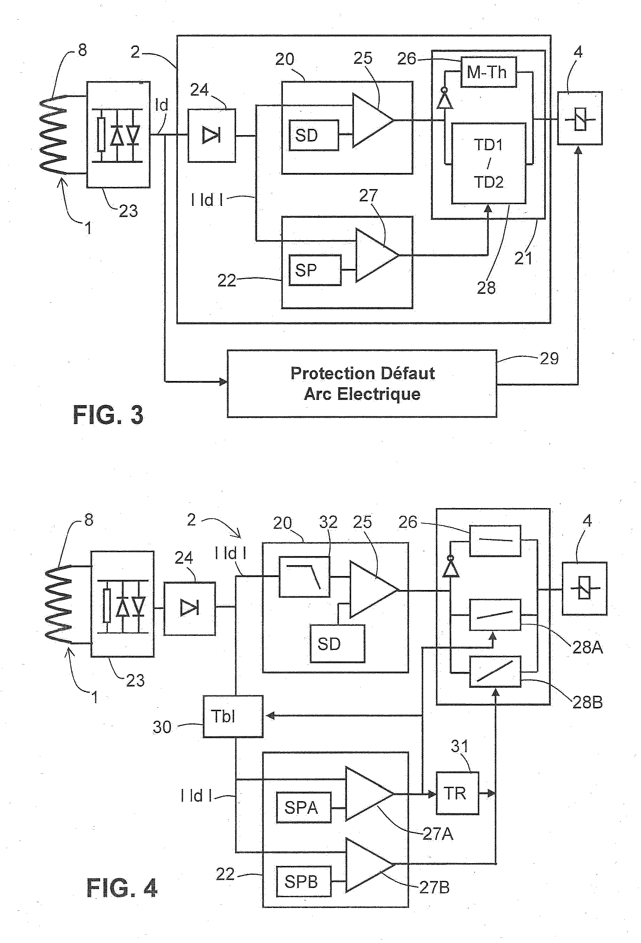

La figure 3 représente un schéma d'un dispositif de protection différentielle selon un second mode de réalisation de l'invention associé à un dispositif de protection arc électrique. Le capteur de courant 1 comporte un enroulement secondaire 8 connecté à un circuit de conditionnement 23. Ce circuit 23 comprend notamment des diodes 10 et une résistance 9 montrées sur la figure 1. Ensuite, le signal représentatif d'un courant différentie Id est appliqué à l'entrée de l'unité de traitement 2. Un module 24 opère le redressement du signal Id. Puis un module 20 de détection de défaut différentiel comporte un comparateur 25 pour comparer le signal Id redressé I Id I à un seuil SD de défaut différentiel. En sortie du module 20, un module de temporisation 21 est commandé pour effectuer les fonctions de temporisation ou de mémoire. Si le courant différentiel Id ou le courant différentiel redressé I Id I dépasse le seuil de détection SD la temporisation de déclenchement est lancée, sinon la temporisation reste en l'état ou opère une fonction de mémoire en décrémentant la valeur du signal de la temporisation précédente. La fonction mémoire est faite par un module 26. Sur la figure 3, le module 22 de détection de signaux à forte énergie reçoit le signal de courant différentiel Id. Dans ce cas particulier, c'est le signal redressé I Id I. Ce signal différentiel est comparé à un seuil SP de détection de signaux à forte énergie dans un comparateur 27. La sortie du module 22 de détection de signaux à forte énergie est appliquée au module 21 de temporisation pour changer de temporisation ou de type de temporisation. Le changement de temporisation est fait dans un module 28 de gestion de la temporisation. Si une première onde ou un premier signal à forte énergie est détecté la temporisation est commandée pour fonctionner en temporisation longue ou lente. Sinon la temporisation est rapide ou courte par défaut ou lors d'une succession de d'onde à forte énergie. Par exemple, à la première onde à forte énergie la temporisation devient longue. Puis, dès la seconde onde à forte énergie, la temporisation rebascule en temporisation courte puisque c'est une séquence d'onde à forte énergie représentative d'un défaut différentiel.

Le seuil de détection de signaux à forte énergie SP du module de détection 22 de signaux à forte énergie pour la commande de passage en temporisation lente ou longue est supérieur au seuil SD de protection différentielle.

Dans le mode réalisation de la figure 3, le dispositif 2 de protection différentielle est, dans ce cas particulier, associé à un dispositif 29 de protection contre les arcs électriques. Ledit dispositif de protection différentielle et ledit dispositif de protection arcs électriques ont, de préférence, un capteur de mesure 8 de courant différentiel commun. Le capteur de mesure 8 de courant différentiel est de préférence un capteur comportant un circuit magnétique 6 en matériaux ferrite. Le circuit magnétique en ferrite a aussi la particularité d'être moins couteux que les circuits magnétiques en fer-nickel. Cependant, l'invention s'applique aussi à toutes sortes de matériau magnétique comme par exemple des dispositifs avec des circuits magnétiques en fer-nickel pour améliorer l'immunité au signaux perturbateurs.

La figure 4 représente un schéma d'un dispositif de protection différentielle selon un troisième mode de réalisation de l'invention. Le module de détection 22 de signaux à forte énergie comporte :
- au moins un premier seuil haut SPA de détection de signaux à forte énergie supérieur à un seuil SD de protection différentielle pour la commande de passage en temporisation lente ou longue, et
- au moins un second seuil bas SPB de détection de signaux à forte énergie supérieur à un seuil SD de protection différentielle pour la commande de passage en temporisation rapide ou courte.

Ainsi, le signal de courant différentiel Id redressé I Id I est appliqué à deux comparateurs 27A et 27B. Le premier comparateur 27A compare le signal différentiel à un premier seuil haut SPA. Si ce seuil haut est dépassé une temporisation lente ou longue 28A est commandée. Le second comparateur 27B compare le signal différentiel à une second seuil bas SPB. Si ce seuil bas est dépassé alors que le premier seuil haut était déjà dépassé dans un cycle précédent, une temporisation rapide ou courte 28B est commandée. Afin d'améliorer le fonctionnement du basculement des temporisations, le module de détection 22 de signaux à forte énergie comporte une inhibition 30 du contrôle de détection de signaux à forte énergie pendant une durée prédéterminé inférieure à une demi-alternance d'un signal alternatif d'un réseau électrique à protéger. De préférence cette durée d'inhibition est de l'ordre de 5 ms. Sur la figure 4, l'inhibition est commandée par la sortie du comparateur 27A. Lorsque la temporisation longue est commandée, un retour à une temporisation courte est commandé au bout d'un temps d'attente prédéterminé ce retour est représenté sur la figure 4 par un module 31.

Le module 21 de temporisation de déclenchement comporte une gestion de temporisation de déclenchement comportant un compteur 35 pour contrôler la durée de temporisation de déclenchement. Le compteur fonctionne avec une incrémentation pour les temporisations lente ou rapide et une décrémentation pour un effet de mémoire. Les temporisation lentes ou rapides sont commandées lorsqu'un défaut différentiel est détecté et la fonction mémoire est commandée lorsque le défaut différentiel n'est plus présent. Pour améliorer le fonctionnement de la détection de défaut différentiel, le module 20 comporte un filtre 32 passe bas sur l'entrée de signal de courant différentiel. De préférence, la constante de temps du filtre est très basse de l'ordre de 2 ms pour ne pas augmenter le temps de traitement.

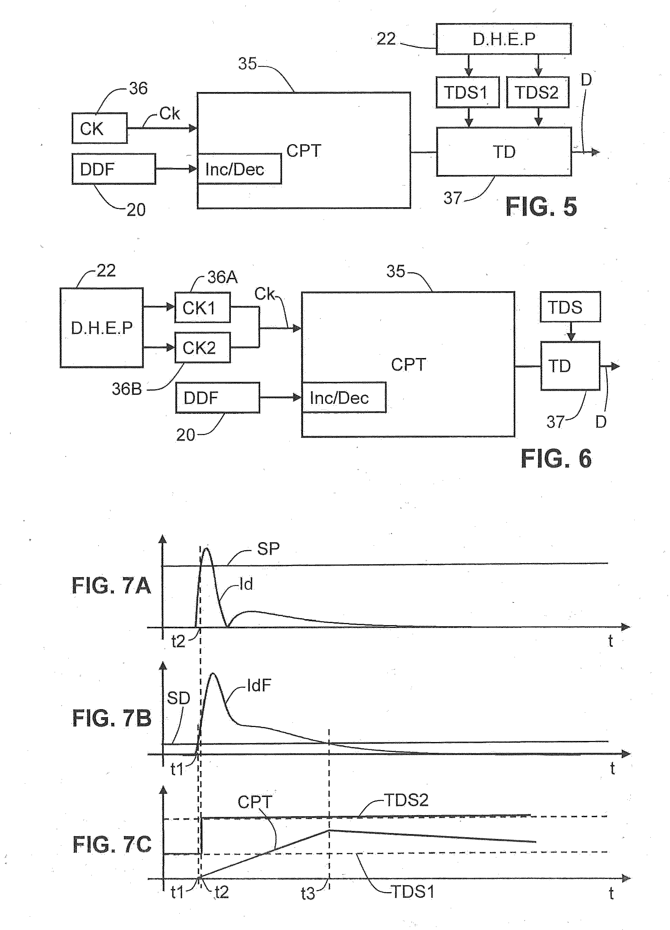

La figure 5 représente un schéma d'un premier mode de commande d'un compteur 35 de temporisation pour un dispositif de protection différentielle selon un mode de réalisation de l'invention. Le compteur comporte une entrée Ck connectée à une horloge 36 et une entrée connectée à la sortie du module de détection de défauts différentiels 20 pour sélectionner incrémentation du compteur en cas de défaut ou la décrémentation lorsque le défaut disparait jusqu'à une valeur basse, par exemple nulle. La sortie du compteur est comparée dans un module 37 à une valeur de seuil pour commander le déclenchement D et la commande du relais. Dans ce mode de réalisation le module de détection 22 de signaux à forte énergie commande un seuil bas de temporisation TDS1 pour la temporisation courte ou rapide et un seuil haut TDS2 pour une temporisation lente ou longue. Ainsi, le compteur a une valeur cible basse pour la temporisation courte ou rapide et une valeur cible haute pour la temporisation longue ou lente.

La figure 6 représente un schéma d'un second mode de commande d'un compteur 35 de temporisation pour un dispositif de protection différentielle selon un mode de réalisation de l'invention. Le compteur comporte une entrée horloge Ck connectée à une première horloge 36A et une seconde horloge 36B. Comme pour figure 5, une entrée est connectée à la sortie du module de détection de défauts différentiels 20 pour sélectionner incrémentation du compteur en cas de défaut ou la décrémentation lorsque le défaut disparait. La sortie du compteur est comparée dans un module 37 à une valeur de seuil TDS pour commander le déclenchement D et la commande du relais. Dans ce mode de réalisation, la valeur de seuil TDS est prédéterminée et le module de détection 22 de signaux à forte énergie commande la première horloge CK1 à une valeur rapide pour la temporisation courte ou rapide et la seconde horloge CK2 à une valeur lente pour une temporisation lente ou longue. Bien entendu, les deux horloges peuvent être réalisées avec une seule horloge ayant deux valeurs de fonctionnement. Ainsi, le compteur a une incrémentation élevée pour la temporisation courte ou rapide et une incrémentation basse pour la temporisation longue ou lente.

Les figures 7A à 7C représentent des signaux avec signal de perturbation dans un dispositif de protection différentielle selon un mode de réalisation de l'invention. La figure 7A montre le fonctionnement d'un module de détection 22 de signaux à forte énergie, la figure 7B montre le fonctionnement d'un module 20 de détection de défaut différentiel et la figure 7C montre le fonctionnement du module de gestion de la temporisation de déclenchement 21 pour une onde perturbatrice de forte énergie. Sur la figure 7B, à un instant t1, un signal de courant différentiel IdF, dans ce cas filtré, dépasse le seuil SD de protection différentielle, la temporisation de déclenchement est alors activée, elle est représentée par l'incrémentation d'un compteur CPT sur la figure 7C. Puis sur la figure 7A, à un instant t2 le signal de courant différentiel Id dépasse le seuil de détection de signaux à forte énergie, le seuil de temporisation cible passe d'une valeur basse TDS1 pour la temporisation courte ou rapide vers une valeur haute TDS2 pour une temporisation longue ou lente. Puis, à un instant t3 le signal de défaut différentiel repasse sous le seuil SD de défaut différentiel et le compteur est décrémenté avec une décroissance lente. Puisque le compteur n'a pas atteint le seuil TDS2, le déclenchement ne se produit pas et le dispositif est immunisé contre les perturbation d'une onde de très forte énergie. La temporisation repassera en seuil TDS1 au bout d'un temps de retour assez long bien après que le compteur ait été décrémenté en dessous du seuil TDS1.

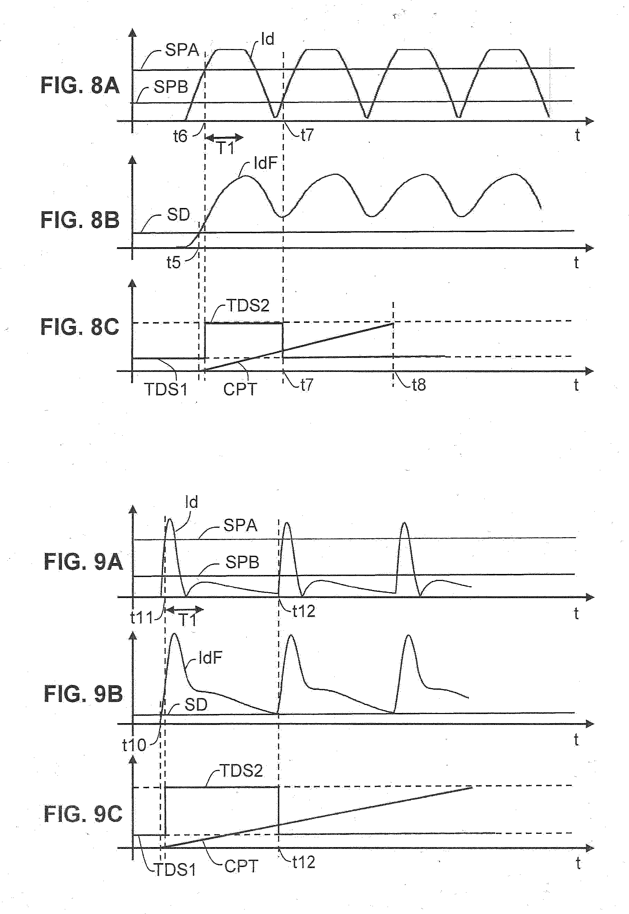

Les figures 8A à 8C représentent des signaux avec fort signal alternatif de type classe AC dans un dispositif de protection différentielle selon un mode de réalisation de l'invention. Dans ce cas, la période globale des signaux redressés au secondaire du capteur est de l'ordre de 10 ms. La figure 8A montre le fonctionnement d'un module de détection 22 de signaux à forte énergie, la figure 8B montre le fonctionnement d'un module 20 de détection de défaut différentiel et la figure 8C montre le fonctionnement du module de gestion de la temporisation de déclenchement 21 pour un courant alternatif de forte énergie. Sur la figure 8B, à un instant t5, un signal de courant différentiel IdF, dans ce cas filtré, dépasse le seuil SD de protection différentielle, la temporisation de déclenchement est alors activée, elle est représentée par l'incrémentation d'un compteur CPT sur la figure 8C. Puis sur la figure 8A, à un instant t6 le signal de courant différentiel Id dépasse un premier seuil haut SPA de détection de signaux à forte énergie, le seuil de temporisation cible passe d'une valeur basse TDS1 pour la temporisation courte ou rapide vers une valeur haute TDS2 pour une temporisation longue ou lente. Puis, à un instant t7 le signal de courant différentiel Id dépasse un second seuil bas SPB de détection de signaux à forte énergie, le seuil de temporisation cible passe d'une valeur haute TDS2 pour une temporisation longue ou lente vers une valeur basse TDS1 pour la temporisation courte ou rapide. Puisque l'incrémentation du compteur a continué, la valeur de temporisation dépasse le seuil bas TDS1 pour une temporisation rapide et le déclenchement est activé à l'instant t7. Sans ce changement de temporisation, le compteur aurait continué jusqu'à l'instant t8, puisque le seuil de défaut SD différentiel est continuellement dépassé. En déclenchant à l'instant t7, le temps de déclenchement est garanti même en présence de signaux différentiel de très forte énergie.

Les figures 9A à 9C représentent des signaux avec signaux de courant de forts courants de type classe A successifs et redressés dans un dispositif de protection différentielle selon un mode de réalisation de l'invention. Puisque le signal est redressé sur les lignes des conducteurs primaires, la période globale des signaux est de l'ordre de 20 ms. La figure 9A montre le fonctionnement d'un module de détection 22 de signaux à forte énergie, la figure 9B montre le fonctionnement d'un module 20 de détection de défaut différentiel et la figure 9C montre le fonctionnement du module de gestion de la temporisation de déclenchement 21 pour un courant alternatif de forte énergie. Sur la figure 9B, à un instant t10, un signal de courant différentiel IdF, dans ce cas filtré, dépasse le seuil SD de protection différentielle, la temporisation de déclenchement est alors activée, elle est représentée par l'incrémentation d'un compteur CPT sur la figure 9C. Puis sur la figure 9A, à un instant t11 le signal de courant différentiel Id dépasse un premier seuil haut SPA de détection de signaux à forte énergie, le seuil de temporisation cible passe d'une valeur basse TDS1 pour la temporisation courte ou rapide vers une valeur haute TDS2 pour une temporisation longue ou lente. Puis, à un instant t12 le signal de courant différentiel Id dépasse un second seuil bas SPB de détection de signaux à forte énergie, le seuil de temporisation cible passe d'une valeur haute TDS2 pour une temporisation longue ou lente vers une valeur basse TDS1 pour la temporisation courte ou rapide. Puisque l'incrémentation du compteur a continué, la valeur de temporisation dépasse le seuil bas TDS1 pour une temporisation rapide et le déclenchement est activé à l'instant t12. En déclenchant à l'instant t12, le temps de déclenchement est garanti même en présence de signaux différentiel de très forte énergie. Pour améliorer encore la performance le dispositif comporte un temps TI d'inhibition du contrôle de détection de signaux à forte énergie de l'ordre de 5 ms.

Un procédé de protection différentielle selon l'invention comportant :
- la mesure d'un signal Id de courant différentiel,
- le traitement de défaut différentiel pour fournir un signal D de déclenchement lorsque le signal de défaut différentiel Id dépasse un seuil de déclenchement prédéterminé SD pendant une durée TD prédéterminée, et
- la détection de signaux différentiels de forte énergie,
comporte une gestion de la temporisation de déclenchement pour contrôler la durée de temporisation TD en fonction de la détection de la présence de signaux à forte énergie, ladite temporisation passant en temporisation longue lorsqu'une première onde à forte énergie est détectée.

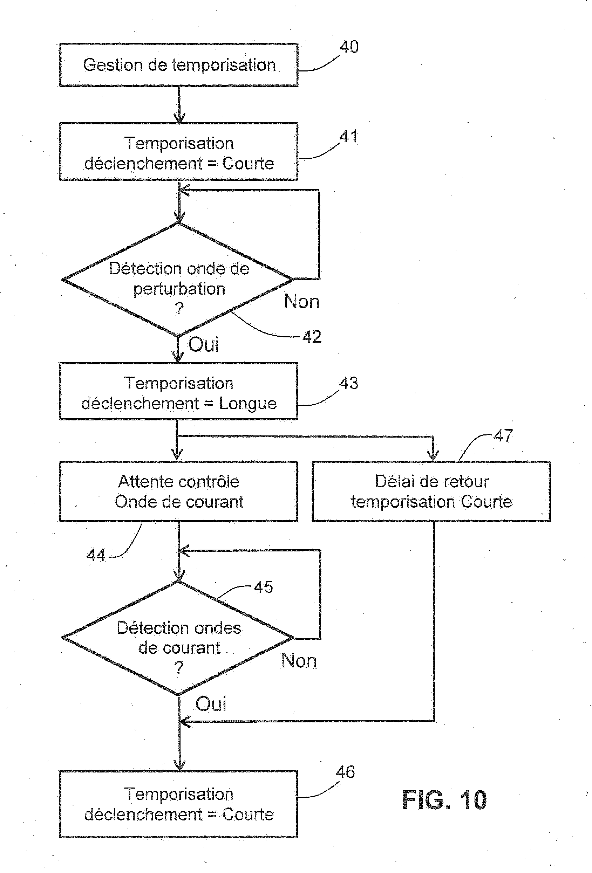

La figure 10 représente un organigramme de la gestion de temporisation dans un procédé selon l'invention. Une étape 40 lance la gestion de la temporisation de déclenchement. A une étape 41, la temporisation est sélectionnée par défaut en temporisation courte ou rapide. Une étape 42 détecte des signaux à forte énergie tels qu'une première onde de perturbation. Si un signal à forte énergie est détecté, une étape 43 passe la temporisation en temporisation longue ou lente pour éviter des déclenchements indésirables. A une étape 44, un temps d'attente TI de quelques millisecondes inhibe le contrôle pour attendre d'autre ondes de fort courant possibles. Ainsi, la détection de signaux à forte énergie comporte une inhibition du contrôle de détection de signaux à forte énergie pendant une durée prédéterminé inférieure à une demi-alternance d'un signal alternatif d'un réseau électrique à protéger, par exemple 5 ms. Puis, l'étape 45 continue à contrôler les apparitions d'ondes de fort courant successives. Si c'est le cas, le système est en présence de défaut électrique à fort courant et une étape 46 sélectionne une temporisation de déclenchement courte pour garantir des temps de déclenchement normalisée et courts. S'il n'y a pas de défaut après la première onde de perturbation, une étape 47 commande le retour à une temporisation courte par défaut, par exemple après 500 ms. Ainsi, la gestion de la temporisation de déclenchement commande le passage de la temporisation de déclenchement en temporisation courte par défaut tant qu'une première onde n'est pas détectée ou lorsqu'une succession d'ondes à forte énergie est détectée.

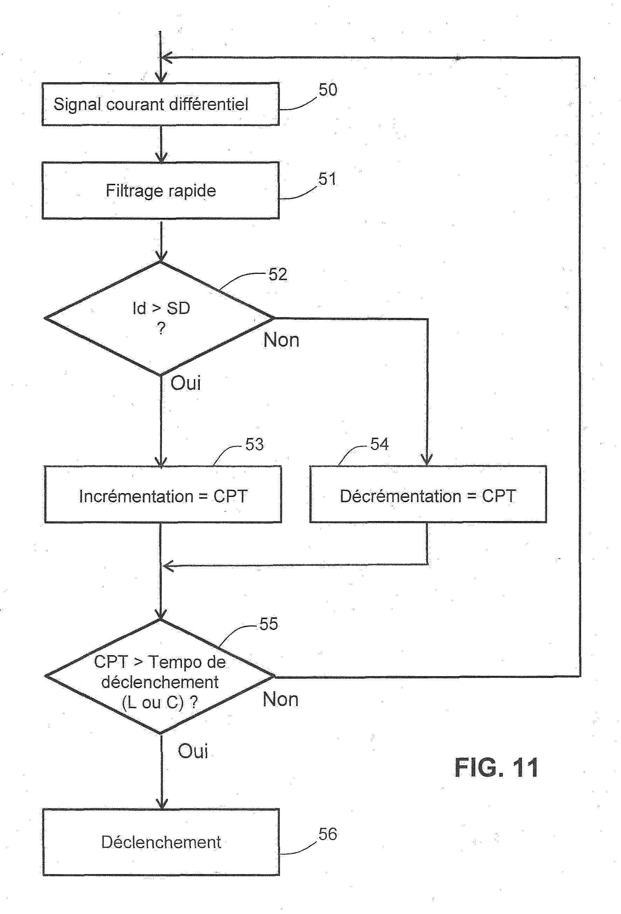

La figure 11 représente un organigramme de la protection différentielle dans un procédé selon l'invention. La gestion de temporisation de déclenchement comporte un compteur pour contrôler la durée de temporisation de déclenchement, ledit compteur ayant une incrémentation pour les temporisations lente ou rapide et une décrémentation pour un effet de mémoire. Les temporisation lentes ou rapides sont commandées lorsqu'un défaut différentiel est détecté. La fonction mémoire est commandée lorsque le défaut différentiel n'est plus présent.

A une étape 50, la détection de défauts différentiels est lancée. Une étape 51 effectue un filtrage passe bas pour lisser un peu le signal de courant différentiel. A une étape 52, le signal de courant différentiel Id est comparé à un seuil SD de détection de défaut différentiel. Si le seuil SD est dépassé, une étape 53 incrémente un compteur CPT soit en temporisation courte ou rapide soit en temporisation longue ou lente selon la gestion de la temporisation est de la présence de signaux de forte énergie. Si le seuil SD n'est pas dépassé, une étape 54 décrémente le compteur CPT jusqu'à une valeur minimale. De préférence, la décrémentation est plus lente que l'incrémentation. Une étape 55, compare la valeur du compteur CPT à une valeur de temporisation de déclenchement lente ou rapide. Si cette valeur est dépassée, une étape 56 commande le déclenchement du relais pour l'ouverture d'un appareil électrique. Sinon la protection différentielle continue.

Dans la description ci-dessus la référence de courant différentiel Id indique toute les formes de représentation du courant différentiel aussi bien au primaire du capteur 1 qu'au secondaire sous une forme de signal représentatif analogique ou numérique. Il en est de même pour des valeurs de seuils, de courants, ou de temporisations.

Les modules du dispositif et les étapes du procédé peuvent être réalisés en circuits électroniques ou sous forme programmée, notamment dans des microcontrôleurs. De préférence, ils seront réalisés en plusieurs technologies dans des circuits spécialisés comprenant des fonctions analogiques, numériques et programmées.

L'appareil électrique représenté sur les figures 1 et 2 est un appareil bipolaire avec deux lignes phase et neutre. Cependant, l'invention s'applique aussi bien à des appareils bipolaires ou tripolaires ou tétrapolaires.

## Revendications

1. Dispositif de protection différentielle comportant :
- un capteur de mesure (1, 6, 8) de courant différentiel (Id), et
- une unité de traitement (2) de défaut différentiel connectée audit capteur de mesure pour recevoir un signal (Id) de mesure de courant différentiel et pour fournir un signal de déclenchement (D) à un actionneur (4), ladite unité de traitement comportant :
- un module (20) de détection de défaut différentiel recevant un signal représentatif d'un courant différentiel (Id) et fournissant un signal représentatif d'un dépassement de seuil (SD) de défaut différentiel,
- un module (21) de temporisation de déclenchement commandé par ledit module (20) de détection de défaut différentiel pour activer ladite temporisation de déclenchement lorsque ledit seuil de défaut différentiel est dépassé, et
- un module de détection (22) de signaux à forte énergie,
**caractérisé en ce que** ledit module (21) de temporisation de déclenchement est connecté audit module (22) de détection de signaux à forte énergie et comporte une gestion (28) de temporisation de déclenchement pour contrôler la durée de temporisation (TD) de déclenchement en fonction de la détection de la présence de signaux à forte énergie,
ledit module (21) de temporisation de déclenchement comportant :
- une temporisation (TD2) longue ou lente commandée lorsque le module de détection de signaux à forte énergie détecte une première onde à forte énergie, et
- une temporisation (TD1) courte ou rapide par défaut tant qu'une première onde n'est pas détectée ou lorsqu'une succession d'ondes à forte énergie est détectée, et
ledit module de détection (22) de signaux à forte énergie comportant au moins un seuil (SP, SPA, SPB) de détection de signaux à forte énergie supérieur à un seuil de protection différentielle (SD) pour la commande de passage en temporisation (TD2) lente ou longue, lesdits signaux et/ou lesdites ondes à forte énergie sont détectés lorsque ledit au moins un seuil (SP, SPA, SPB) de détection de signaux à forte énergie est dépassé.

2. Dispositif de protection selon la revendication 1 **caractérisé en ce que** ledit module de détection (22) de signaux à forte énergie comporte :
- au moins un premier seuil (SPA) de détection de signaux à forte énergie supérieur à un seuil (SD) de protection différentielle pour la commande de passage en temporisation (TD2) lente ou longue,
- au moins un second seuil (SPB) bas seuil de détection de signaux à forte énergie supérieur à un seuil (SD) de protection différentielle pour la commande de passage en temporisation (TD1) rapide ou courte.

3. Dispositif de protection selon l'une quelconque des revendications 1 ou 2 **caractérisé en ce que** ledit module de détection (22) de signaux à forte énergie comporte une inhibition (30, 44) du contrôle de détection de signaux à forte énergie pendant une durée (TI) prédéterminé inférieure à une demi-alternance d'un signal alternatif d'un réseau électrique à protéger.

4. Dispositif de protection selon l'une quelconque des revendications 1 à 3 **caractérisé en ce que** ledit module (21) de temporisation de déclenchement comporte une gestion de temporisation de déclenchement comportant un compteur (CPT, 35) pour contrôler ladite durée (TD) de temporisation de déclenchement, ledit compteur ayant une incrémentation (28A, 28B, 53) pour les temporisations lente ou rapide et une décrémentation (26) pour un effet de mémoire, les temporisation (TD1, TD2) lentes ou rapides étant commandées lorsque un défaut différentiel est détecté et la fonction mémoire (26, 54) étant commandée lorsque ledit défaut différentiel n'est plus présent.

5. Dispositif de protection selon la revendication 4 **caractérisé en ce que** ledit compteur (CPT, 35) a une incrémentation (28B, CK1) élevée pour la temporisation courte ou rapide et une incrémentation (28A, CK2) basse pour la temporisation longue ou lente.

6. Dispositif de protection selon la revendication 5 **caractérisé en ce que** ledit compteur (CPT) a une valeur cible basse (TDS1) pour la temporisation courte ou rapide et une valeur cible haute (TDS2) pour la temporisation longue ou lente.

7. Dispositif de protection selon l'une quelconque des revendications 1 à 6 **caractérisé en ce que** le capteur de mesure (1, 6, 8) de courant différentiel (Id) est un capteur comportant un circuit magnétique (6) en matériaux ferrite.

8. Dispositif de protection selon l'une quelconque des revendications 1 à 7 **caractérisé en ce que** ledit dispositif (2) de protection différentielle est associé à un dispositif (29) de protection contre les arcs électriques, ledit dispositif de protection différentielle et ledit dispositif de protection arcs électriques ayant un capteur de mesure (1, 6, 8) de courant différentiel commun.

9. Appareil de coupure électrique comportant les conducteurs (7) principaux connectés en série avec des contacts (3) principaux et un mécanisme (4) d'ouverture desdits contacts principaux, **caractérisé en ce qu'**il comporte un dispositif de protection différentielle selon l'une quelconque des revendications 1 à 8 comportant une gestion de temporisation de déclenchement en fonction de la détection de la présence de signaux à forte énergie, lesdits moyens (1) de mesure étant disposés autour des conducteurs (7) principaux pour mesurer un courant différentiel (Id) et lesdits moyens actionneurs coopérant avec ledit mécanisme (4) d'ouverture.

10. Procédé de protection différentielle comportant :
- la mesure (50) d'un signal (Id) représentatif d'un courant différentiel,
- le traitement (52) de défaut différentiel pour fournir un signal (D) de déclenchement lorsque le signal de défaut différentiel dépasse un seuil (SD) de déclenchement prédéterminé pendant une durée (TD) prédéterminée,
- la détection (42, 45) de signaux différentiels de forte énergie,
**caractérisé en ce qu'**il comporte une gestion (42, 43, 44, 45) de la temporisation de déclenchement pour contrôler la durée de temporisation (41, 43, 46) en fonction de la détection de la présence de signaux à forte énergie, ladite temporisation (43) passant en temporisation longue (TD2) lorsqu'une première onde à forte énergie est détectée,
la détection (22) de signaux de signaux différentiels de forte énergie comporte au moins un seuil (SP, SPA, SPB) de détection de signaux à forte énergie supérieur à un seuil de protection différentielle (SD) pour la commande de passage en temporisation (TD2) lente ou longue, lesdits signaux et/ou lesdites ondes à forte énergie sont détectés lorsque ledit au moins un seuil (SP, SPA, SPB) de détection de signaux à forte énergie est dépassé.

11. Procédé de protection différentielle la revendication 10 **caractérisé en ce que** ladite gestion de la temporisation de déclenchement commande le passage (41) de la temporisation de déclenchement en temporisation courte (TD1) par défaut tant qu'une première onde n'est pas détectée ou lorsqu'une succession d'ondes à forte énergie est détectée (45).

12. Procédé de protection différentielle selon l'une des revendications 10 ou 11 caractérisé ladite détection (22) de signaux à forte énergie comporte une inhibition (44) du contrôle de détection de signaux à forte énergie pendant une durée (TI) prédéterminé inférieure à une demi-alternance d'un signal alternatif d'un réseau électrique à protéger.

13. Procédé de protection différentielle selon l'une quelconque des revendications 10 à 12 caractérisé ladite gestion de temporisation de déclenchement comporte un compteur (CPT) pour contrôler la durée de temporisation de déclenchement (TD), ledit compteur ayant une incrémentation (53) pour les temporisations lente ou rapide et une décrémentation (54) pour un effet de mémoire, les temporisations lentes ou rapides étant commandées lorsqu'un défaut différentiel est détecté (52) et la fonction mémoire étant commandée lorsque le défaut différentiel n'est plus présent.

## Patentansprüche

1. Vorrichtung zum Differentialschutz, die Folgendes umfasst:
- einen Messer (1, 6, 8) für Differentialstrom (Id) und
- eine Einheit zur Verarbeitung (2) eines Differentialfehlers, die mit dem Messer verbunden ist, um ein Messsignal (Id) eines Differentialstroms zu empfangen und um ein Auslösesignal (D) an einen Betätiger (4) zu liefern, wobei die Verarbeitungseinheit Folgendes umfasst:
- ein Modul (20) zur Detektion eines Differentialfehlers, das ein Signal empfängt, das für einen Differentialstrom (Id) repräsentativ ist, und das ein Signal liefert, das für eine Überschreitung eines Differentialfehlerschwellenwerts (SD) repräsentativ ist,
- ein Modul (21) zur Auslöseverzögerung, das von dem Modul (20) zur Detektion eines Differentialfehlers angesteuert wird, um die Auslöseverzögerung zu aktivieren, wenn der Differentialfehlerschwellenwert überschritten wird, und
- ein Modul zur Detektion (22) von Signalen mit hoher Energie,
**dadurch gekennzeichnet, dass** das Modul (21) zur Auslöseverzögerung mit dem Modul (22) zur Detektion von Signalen mit hoher Energie verbunden ist und eine Einheit zur Verwaltung (28) der Auslöseverzögerung umfasst, um die Auslöseverzögerungsdauer (TD) in Abhängigkeit von der Detektion des Vorhandenseins von Signalen mit hoher Energie zu überwachen,
wobei das Modul (21) zur Auslöseverzögerung Folgendes umfasst:
- eine lange oder langsame Verzögerung (TD2), die angesteuert wird, wenn das Modul zur Detektion von Signalen mit hoher Energie eine erste Welle mit hoher Energie detektiert, und
- eine standardmäßige kurze oder schnelle Verzögerung (TD1), solange eine erste Welle nicht detektiert wird oder wenn eine Folge von Wellen mit hoher Energie detektiert wird, und
wobei das Modul zur Detektion (22) von Signalen mit hoher Energie mindestens einen Detektionsschwellenwert (SP, SPA, SPB) für Signale mit hoher Energie umfasst, der größer als ein Differentialschutzschwellenwert (SD) ist, um den Übergang zu einer langsamen oder langen Verzögerung (TD2) anzusteuern, wobei die Signale und/oder die Wellen mit hoher Energie detektiert werden, wenn der mindestens eine Detektionsschwellenwert (SP, SPA, SPB) für Signale mit hoher Energie überschritten wird.

2. Schutzvorrichtung nach Anspruch 1, **dadurch gekennzeichnet, dass** das Modul zur Detektion (22) von Signalen mit hoher Energie Folgendes umfasst:
- mindestens einen ersten Detektionsschwellenwert (SPA) für Signale mit hoher Energie, der größer als ein Differentialschutzschwellenwert (SD) ist, um den Übergang zu einer langsamen oder langen Verzögerung (TD2) anzusteuern,
- mindestens einen zweiten niedrigen Detektionsschwellenwert (SPB) für Signale mit hoher Energie, der größer als ein Differentialschutzschwellenwert (SD) ist, um den Übergang zu einer schnellen oder kurzen Verzögerung (TD1) anzusteuern.

3. Schutzvorrichtung nach einem der Ansprüche 1 oder 2, **dadurch gekennzeichnet, dass** das Modul zur Detektion (22) von Signalen mit hoher Energie während einer vorgegebenen Dauer (TI), die kleiner als eine Halbperiode eines Wechselstromsignals eines zu schützenden elektrischen Netzes ist, eine Sperre (30, 44) der Überwachung zur Detektion von Signalen mit hoher Energie umfasst.

4. Schutzvorrichtung nach einem der Ansprüche 1 bis 3, **dadurch gekennzeichnet, dass** das Modul (21) zur Auslöseverzögerung eine Einheit zur Verwaltung der Auslöseverzögerung umfasst, die einen Zähler (CPT, 35) umfasst, um die Auslöseverzögerungsdauer (TD) zu überwachen, wobei der Zähler eine Inkrementierung (28A, 28B, 53) für die langsame oder schnelle Verzögerung und eine Dekrementierung (26) für einen Gedächtniseffekt aufweist, wobei die langsamen oder schnellen Verzögerungen (TD1, TD2) angesteuert werden, wenn ein Differentialfehler detektiert wird, und die Gedächtnisfunktion (26, 54) angesteuert wird, wenn der Differentialfehler nicht mehr vorhanden ist.

5. Schutzvorrichtung nach Anspruch 4, **dadurch gekennzeichnet, dass** der Zähler (CPT, 35) eine hohe Inkrementierung (28B, CK1) für die kurze oder schnelle Verzögerung und eine niedrige Inkrementierung (28A, CK2) für die lange oder langsame Verzögerung aufweist.

6. Schutzvorrichtung nach Anspruch 5, **dadurch gekennzeichnet, dass** der Zähler (CPT) einen niedrigen Zielwert (TDS1) für die kurze oder schnelle Verzögerung und einen hohen Zielwert (TDS2) für die lange oder langsame Verzögerung aufweist.

7. Schutzvorrichtung nach einem der Ansprüche 1 bis 6, **dadurch gekennzeichnet, dass** der Messer (1, 6, 8) für Differentialstrom (Id) ein Sensor ist, der einen Magnetkreis (6) aus ferritischen Materialien umfasst.

8. Schutzvorrichtung nach einem der Ansprüche 1 bis 7, **dadurch gekennzeichnet, dass** die Vorrichtung (2) zum Differentialschutz mit einer Vorrichtung (29) zum Schutz vor Lichtbögen assoziiert ist, wobei die Vorrichtung zum Differentialschutz und die Lichtbogenschutzvorrichtung einen gemeinsamen Messer (1, 6, 8) für Differentialstrom aufweisen.

9. Elektrisches Schaltgerät, das die Hauptleiter (7), die mit Hauptkontakten (3) in Reihe verbunden sind, und einen Mechanismus (4) zum Öffnen der Hauptkontakte umfasst, **dadurch gekennzeichnet, dass** es eine Vorrichtung zum Differentialschutz nach einem der Ansprüche 1 bis 8 umfasst, die eine Einheit zur Verwaltung der Auslöseverzögerung in Abhängigkeit von der Detektion des Vorhandenseins von Signalen mit hoher Energie umfasst, wobei die Messmittel (1) um die Hauptleiter (7) herum angeordnet sind, um einen Differentialstrom (Id) zu messen, und die Betätigermittel mit dem Öffnungsmechanismus (4) zusammenwirken.

10. Verfahren zum Differentialschutz, das Folgendes umfasst:
- Messen (50) eines Signals (Id), das für einen Differentialstrom repräsentativ ist,
- Verarbeiten (52) eines Differentialfehlers, um ein Auslösesignal (D) zu liefern, wenn das Differentialfehlersignal einen vorgegebenen Auslöseschwellenwert (SD) während einer vorgegebenen Dauer (TD) überschreitet,
- Detektieren (42, 45) von Differentialsignalen mit hoher Energie,
**dadurch gekennzeichnet, dass** es eine Einheit zur Verwaltung (42, 43, 44, 45) der Auslöseverzögerung umfasst, um die Verzögerungsdauer (41, 43, 46) in Abhängigkeit von der Detektion des Vorhandenseins von Signalen mit hoher Energie zu überwachen, wobei die Verzögerung (43) zu einer langen Verzögerung (TD2) übergeht, wenn eine erste Welle mit hoher Energie detektiert wird,
wobei die Detektion (22) von Differentialsignalen mit hoher Energie mindestens einen Detektionsschwellenwert (SP, SPA, SPB) für Signale mit hoher Energie umfasst, der größer als ein Differentialschutzschwellenwert (SD) ist, um den Übergang zu einer langsamen oder langen Verzögerung (TD2) anzusteuern, wobei die Signale und/oder die Wellen mit hoher Energie detektiert werden, wenn der mindestens eine Detektionsschwellenwert (SP, SPA, SPB) für Signale mit hoher Energie überschritten wird.

11. Verfahren zum Differentialschutz nach Anspruch 10, **dadurch gekennzeichnet, dass** die Einheit zur Verwaltung der Auslöseverzögerung den Übergang (41) der Auslöseverzögerung zu der standardmäßigen kurzen Verzögerung (TD1) ansteuert, solange eine erste Welle nicht detektiert wird oder wenn eine Folge von Wellen mit hoher Energie detektiert (45) wird.

12. Verfahren zum Differentialschutz nach einem der Ansprüche 10 oder 11, **dadurch gekennzeichnet, dass** die Detektion (22) von Signalen mit hoher Energie während einer vorgegebenen Dauer (TI), die kleiner als eine Halbperiode eines Wechselstromsignals eines zu schützenden elektrischen Netzes ist, eine Sperre (44) der Überwachung zur Detektion von Signalen mit hoher Energie umfasst.

13. Verfahren zum Differentialschutz nach einem der Ansprüche 10 bis 12, **dadurch gekennzeichnet, dass** die Einheit zur Verwaltung der Auslöseverzögerung einen Zähler (CPT) umfasst, um die Auslöseverzögerungsdauer (TD) zu überwachen, wobei der Zähler eine Inkrementierung (53) für die langsame oder schnelle Verzögerung und eine Dekrementierung (54) für einen Gedächtniseffekt aufweist, wobei die langsamen oder schnellen Verzögerungen angesteuert werden, wenn ein Differentialfehler detektiert (52) wird, und die Gedächtnisfunktion angesteuert wird, wenn der Differentialfehler nicht mehr vorhanden ist.

## Claims

1. Differential protection device comprising:
- a differential current (Id) measurement sensor (1, 6, 8), and
- a differential fault processing unit (2) connected to said measurement sensor so as to receive a differential current measurement signal (Id) and so as to deliver a trip signal (D) to an actuator (4), said processing unit comprising:
- a differential fault detection module (20) receiving a signal representative of a differential current (Id) and delivering a signal representative of a differential fault threshold (SD) being exceeded,
- a trip delay module (21) controlled by said differential fault detection module (20) so as to activate said trip delay when said differential fault threshold is exceeded, and
- a high-energy signal detection module (22),
**characterized in that** said trip delay module (21) is connected to said high-energy signal detection module (22) and comprises trip delay management (28) for controlling the trip delay period (TD) depending on the detection of the presence of high-energy signals,
said trip delay module (21) comprising:
- a long or slow delay (TD2) which is ordered when the high-energy signal detection module detects a first high-energy wave, and
- a short or fast delay (TD1) by default for as long as a first wave is not detected or when a series of high-energy waves is detected, and
said high-energy signal detection module (22) comprising at least one high-energy signal detection threshold (SP, SPA, SPB) which is higher than a differential protection threshold (SD), with a view to ordering a change to a slow or long delay (TD2), said high-energy waves and/or signals being detected when said at least one high-energy signal detection threshold (SP, SPA, SPB) is exceeded.

2. Protection device according to Claim 1, **characterized in that** said high-energy signal detection module (22) comprises:
- at least one first high-energy signal detection threshold (SPA) which is higher than a differential protection threshold (SD), with a view to ordering a change to a slow or long delay (TD2),
- at least one low second high-energy signal detection threshold (SPB) which is higher than a differential protection threshold (SD), with a view to ordering a change to a fast or short delay (TD1).

3. Protection device according to either one of Claims 1 and 2, **characterized in that** said high-energy signal detection module (22) comprises inhibiting (30, 44) the high-energy signal detection control for a predetermined period (TI) which is shorter than a half-cycle of an AC signal of an electrical network to be protected.

4. Protection device according to any one of Claims 1 to 3, **characterized in that** said trip delay module (21) comprises trip delay management comprising a counter (CPT, 35) for controlling said trip delay period (TD), said counter having an incrementation (28A, 28B, 53) for the slow or fast delays and a decrementation (26) for a memory effect, the slow or fast delays (TD1, TD2) being ordered when a differential fault is detected and the memory function (26, 54) being ordered when said differential fault is no longer present.

5. Protection device according to Claim 4, **characterized in that** said counter (CPT, 35) has a high incrementation (28B, CK1) for the short or fast delay and a low incrementation (28A, CK2) for the long or slow delay.

6. Protection device according to Claim 5, **characterized in that** said counter (CPT) has a low target value (TDS1) for the short or fast delay and a high target value (TDS2) for the long or slow delay.

7. Protection device according to any one of Claims 1 to 6, **characterized in that** the differential current (Id) measurement sensor (1, 6, 8) is a sensor comprising a magnetic circuit (6) made of ferrite materials.

8. Protection device according to any one of Claims 1 to 7, **characterized in that** said differential protection device (2) is associated with a device (29) for protecting against electric arcs, said differential protection device and said electric arc protection device having a common differential current measurement sensor (1, 6, 8).

9. Electric switching apparatus comprising main conductors (7) connected in series with main contacts (3) and a mechanism (4) for opening said main contacts, **characterized in that** it comprises a differential protection device according to any one of Claims 1 to 8 comprising trip delay management depending on the detection of the presence of high-energy signals, said measurement means (1) being arranged around the main conductors (7) with a view to measuring a differential current (Id) and said actuating means interacting with said opening mechanism (4).

10. Differential protection method comprising:
- measuring (50) a signal (Id) representative of a differential current,
- differential fault processing (52) with a view to delivering a trip signal (D) when the differential fault signal exceeds a predetermined trip threshold (SD) for a predetermined period (TD),
- high-energy differential signal detection (42, 45),
**characterized in that** it comprises management (42, 43, 44, 45) of the trip delay so as to control the delay period (41, 43, 46) depending on the detection of the presence of high-energy signals, said delay (43) changing to a long delay (TD2) when a first high-energy wave is detected,
the high-energy differential signal detection (22) comprising at least one high-energy signal detection threshold (SP, SPA, SPB) which is higher than a differential protection threshold (SD), with a view to ordering a change to a slow or long delay (TD2), said high-energy waves and/or signals being detected when said at least one high-energy signal detection threshold (SP, SPA, SPB) is exceeded.

11. Differential protection method according to Claim 10, **characterized in that** said management of the trip delay orders the change (41) of the trip delay to a short delay (TD1) by default for as long as a first wave is not detected or when a series of high-energy waves is detected (45).

12. Differential protection method according to one of Claims 10 and 11, **characterized in that** said high-energy signal detection (22) comprises inhibiting (44) the high-energy signal detection control for a predetermined period (TI) which is shorter than a half-cycle of an AC signal of an electrical network to be protected.

13. Differential protection method according to any one of Claims 10 to 12, **characterized in that** said trip delay management comprises a counter (CPT) for controlling the trip delay period (TD), said counter having an incrementation (53) for the slow or fast delays and a decrementation (54) for a memory effect, the slow or fast delays being ordered when a differential fault is detected (52) and the memory function being ordered when the differential fault is no longer present.
